# FASCICULE DE BREVET EUROPEEN

(11) **EP 2 841 742 B1**
(45) Date de publication et mention de la délivrance du brevet: **30.03.2016**
(21) Numéro de dépôt: 13722505.8
(22) Date de dépôt: 18.04.2013
(51) Int. Cl.: F02C 7/272, F02C 7/275

(54) **PROCÉDÉ ET SYSTÈME DE DÉMARRAGE D'URGENCE D'ARCHITECTURE GÉNÉRATRICE D'ÉNERGIE**
VERFAHREN UND SYSTEM FÜR NOTFALLSTART EINES ENERGIEGENERATORAGGREGATES
METHOD AND SYSTEM FOR AN EMERGENCY START OF A POWER GENERATOR

(30) Priorité: 27.04.2012 FR 1253938
(43) Date de publication de la demande: 04.03.2015
(73) Titulaire: Turbomeca, 64510 Bordes (FR)
(72) Inventeur: FILIPUTTI, Hugues, F-38650 Monestier de Clermont (FR); GARDE, Franck, F-83870 Signes (FR); THIRIET, Romain, F-64110 Jurancon (FR)
(74) Mandataire: Gevers & Orès
(86) Numéro de dépôt international: PCT/FR2013/050863
(87) Numéro de publication internationale: WO 2013/160590

(56) Documents cités:
- FR-A- 1 104 252
- FR-A- 1 126 010
- FR-A- 1 303 228
- FR-A- 1 334 270
- US-A- 2 942 415

## Description

### DOMAINE TECHNIQUE

L'invention concerne un procédé et un Système de démarrage d'urgence d'une architecture génératrice d'énergie dans des situations critiques où la motorisation dédiée est arrêtée ou insuffisante pour faire face aux besoins.

L'invention s'applique dans le cadre d'une assistance ou d'un ultime secours pour déclencher l'activation ou la réactivation de génération d'énergie dans différents domaines technologiques :
- en motorisation aéronautique pour les turbines à gaz d'avion ou d'hélicoptère ;
- en génie électrique pour les disjoncteurs ultra-limiteurs d'infrastructures de production et de transport d'énergie électrique, en particulier dans les sous-marins ;
- en forage ou en immersion maritime pour des vis de vanne maîtresse, des robots, etc. ; domaine dénommé « Oil & Gas » ;
- en milieux extrêmes (hôpital, centrales nucléaires, aéroports, centres serveurs) pour des générateurs, pompes, vannes de sécurité, etc. ;
- en génération thermodynamique d'une architecture de générateur de type Stirling ou Ericsson ;
- en génération hydraulique ou pneumatique pour manoeuvrer des masses (vérins de train d'atterrissage, engins d'élévation, etc.).

En particulier dans le cas d'un hélicoptère bimoteur, des situations critiques peuvent surgir lorsque l'un des moteurs est volontairement éteint. Ce mode est en effet recommandé pour minimiser la consommation pendant les phases de recherche et de croisière d'une mission. Dans ce contexte, deux situations exceptionnelles peuvent survenir qui nécessitent alors un redémarrage d'urgence du moteur éteint :
- le seul moteur actif s'arrête ou ralentit sensiblement pour une raison inconnue;
- les conditions de vol subissent une dégradation imprévue qui nécessite un retour en mode bimoteur (hauteur de vol insuffisante par exemple).

### ETAT DE LA TECHNIQUE

Le redémarrage d'une turbine à gaz peut être réalisé, actuellement, selon trois types de démarreurs de nature physique différente :
- les démarreurs électriques alimentés par le réseau de bord ou par batterie ;
- les démarreurs pneumatiques comportant un dispositif convertisseur de couple (train épicycloïdal ou boîte à pignons étagée) et un réservoir de gaz sous pression ; et
- les démarreurs hydrauliques constitués d'un générateur de fluide sous pression couplé à un réservoir de fluide sous pression.

De tels systèmes sont divulgués dans les documents US 2 942 415 et FR 1126010.

Les démarreurs pneumatiques et hydrauliques présentent des inconvénients liés à leur masse et à leur encombrement. De plus, des contrôles périodiques des enveloppes et le remplacement des réservoirs sous pression sont nécessaires.

Aussi, pour l'application hélicoptère en situation d'urgence visée ci-dessus, le redémarrage en vol d'un turbomoteur est assuré par un démarreur électrique alimenté par le réseau de bord ou par une batterie de réserve. Cependant, cette technologie est coûteuse : présence d'aimants permanents, de flux transverse, d'une architecture planaire, etc. Par ailleurs, elle nécessite un dispositif électronique de surveillance de charge et un changement périodique de batterie.

De plus, et de manière essentielle, il apparaît que ces démarreurs électriques ne fournissent pas de couple instantané. Il s'ensuit que la séquence de réaction dure typiquement une trentaine de secondes pour redémarrer le moteur en veille, ce qui pourrait s'avérer trop long selon les conditions de vol, par exemple à faible altitude avec une défaillance au moins partiel du seul moteur actif. Si le moteur en veille ne redémarre pas à temps, l'atterrissage avec le moteur en difficulté peut s'avérer critique.

Plus généralement, les situations d'urgence qui peuvent surgir dans les applications envisagées ci-dessus, imposent de pouvoir disposer de temps de réaction de l'ordre de quelques secondes, en particulier de deux à trois secondes, voire inférieure à la seconde, afin d'assurer un démarrage ou un redémarrage d'urgence avec une marge de sécurité suffisante.

### EXPOSE DE L'INVENTION

L'invention vise à disposer de démarreurs d'urgence permettant une réactivité de cet ordre de grandeur, à savoir de quelques secondes, sans présenter les inconvénients liés à la masse et à l'encombrement des démarreurs hydrauliques ou pneumatiques de secours évoqués ci-dessus.

Pour ce faire, la présente invention propose de coupler une poussée instantanée de gaz de type pyrotechnique avec un générateur volumétrique de transmission en liaison avec un couplage/découplage automatique sur l'architecture à démarrer.

Plus précisément, la présente invention a pour objet un procédé de démarrage d'urgence d'une architecture génératrice d'énergie dans lequel, une situation de démarrage d'urgence de l'architecture étant détectée, au moins un générateur de combustion de gaz pyrotechnique est déclenché. Des gaz sous pression sont alors générés par cette combustion et directement injectés dans un moteur volumétrique à engrenages de préférence droits. Une partie de ces gaz entraînent alors en rotation les engrenages du moteur et, simultanément, la partie des gaz restants projette, contre une force de rappel, une connectique due couplage entre le moteur et l'architecture. La connectique assure la transmission d'énergie par entraînement en rotation d'un arbre d'engrenage du moteur volumétrique sur un arbre de réception de l'architecture. Lorsque la poussée devient inférieure à la force de rappel, celle-ci repousse automatiquement la connectique et l'architecture est déconnectée du moteur volumétrique.

Selon des modes de mise en oeuvre particuliers :
- la connectique de couplage entre l'arbre d'engrenage et l'arbre de réception de l'architecture à démarrer est réalisée par friction :
- les gaz restants sont injectés dans le moteur volumétrique de manière périphérique autour de l'axe longitudinal de sorte que la connectique de couplage provoque, par compression radiale, l'entraînement en rotation de l'arbre de l'architecture à démarrer;
- les gaz restants sont injectés dans le moteur volumétrique de manière centrale le long de l'axe longitudinal de sorte que la connectique de couplage provoque, par couplage conique, l'entraînement en rotation d'un arbre de l'architecture à démarrer par compression axiale et radiale ;
- des générations de combustion de gaz pyrotechnique sont successivement déclenchés ;
- la force de rappel est générée par des moyens choisis entre la force élastique, la force électromagnétiques et la détente d'un fluide comprimé.

L'invention se rapporte également à un système de démarrage d'urgence d'une architecture génératrice d'énergie apte à mettre en oeuvre le procédé ci-dessus. Ce système comporte au moins un générateur de gaz pyrotechnique relié à un initiateur électrique lui-même relié à un calculateur, un moteur volumétrique comprenant un carter définissant un espace interne logeant des engrenages droits, le générateur de gaz pyrotechnique étant couplé au moteur par une entrée du carter. Le moteur comporte un moyen de connexion, apte à se déplacer en une extrémité d'un arbre de transmission centré sur un axe d'engrenage du moteur volumétrique, pour pouvoir coupler cet arbre de transmission à un arbre récepteur de l'architecture via un embrayage centrifuge. Et un moyen de rappel agencé en butée est apte à exercer une force de rappel contre la pression exercée sur le moyen de connexion.

Typiquement, chaque moteur volumétrique est dimensionné pour pouvoir fournir une puissance de l'ordre de 40 kW pendant environ 2,5 secondes pour chaque injection de gaz pyrotechnique, avec un temps de réaction de l'ordre de 0,5 seconde. De plus, le système est dimensionné et qualifié pour permettre une utilisation nominale dans la gamme de température comprise entre -30 et +50°C, gamme qui peut s'étendre jusqu'aux températures de limite de qualification des équipements environnants, par exemple de l'ordre de 135°C pour les milieux extrêmes évoqués plus haut. La pression ambiante d'utilisation est comprise entre environ 60 et 110 kPa.

Selon des modes préférés de réalisation:
- un espace annulaire, formé dans un prolongement du carter en périphérie de l'arbre de transmission du moteur volumétrique, communique avec ledit espace interne pour permettre une injection d'une partie des gaz provenant de la combustion du gaz pyrotechnique jusqu'au moyen de connexion ; ce moyen de connexion étant composé d'un piston annulaire, apte à se déplacer en translation sous la poussée des gaz, le long de l'arbre de transmission du moteur, pour exercer une pression sur une ferrule apte à s'écarter radialement sous cette pression et entraîner l'embrayage centrifuge par friction ;
- le deuxième élément de connexion est composé d'au moins une portion de ferrule annulaire ouverte dont l'écartement radial est réalisé par glissement le long d'une portion conique de l'arbre de transmission du moteur ;
- un conduit relié à l'entrée de gaz du carter communique avec un alésage central de l'arbre de transmission pour permettre une circulation d'une partie des gaz provenant du générateur de gaz pyrotechnique jusqu'au moyen de connexion ; ce moyen de connexion étant composé d'un piston conique apte à se déplacer en translation, sous la poussée des gaz, selon l'axe de l'arbre de transmission du moteur pour se loger dans un alésage conique, solidaire de l'embrayage centrifuge, afin de l'entraîner par friction ;
- l'initiateur électrique est constitué par un boîtier électronique comportant une source d'énergie électrique autonome, et une carte électronique de commande intégrant un composant thermosensible et un microcontrôleur de gestion de la source électrique, du composant thermosensible, d'autotests fonctionnels ainsi que des alarmes de déclenchement d'une cartouche d'allumage du générateur de gaz pyrotechnique ;
- les engrenages du moteur volumétrique sont des pignons à denture droite ;
- le moteur volumétrique est à deux étages, un premier étage est couplé en aval à un second étage monté en tandem, le premier moteur étant un moteur à pignons droits ou un moteur à palettes, la sortie de gaz du premier moteur étant reliée à l'entrée de gaz du second moteur qui peut être de dimension sensiblement supérieure au premier moteur, l'arbre central ou de transmission du premier moteur étant monté sur l'arbre secondaire du second moteur ;
- dans le cas où l'architecture est une turbomachine présentant un arbre de corps Haute Pression dit HP, l'arbre de réception est choisi parmi un arbre de boîte d'accessoires montée sur le corps HP, une cloche solidaire d'un pignon de la boîte d'accessoires et utilisée comme embrayage centrifuge, et l'arbre du corps HP ;
- dans le cas où l'architecture est un disjoncteur ultra limiteur, l'arbre de réception est l'arbre des pôles libéré lors d'un court-circuit;
- dans le domaine « Oli & Gas » ou en milieux extrêmes, l'arbre de réception est un arbre d'outillage de commande mécanique (vanne, crémaillère, robot, pompe, grille de modérateurs) ;
- dans le cas d'une architecture de type moteur thermodynamique à cycle de Stirling ou Ericsson ou équivalent, comportant un ensemble échangeur thermique et un circuit de calage angulaire variable, l'arbre de réception est l'arbre de commande de l'ensemble échangeur thermique et le boîtier électronique intègre une fonction supplémentaire de calage angulaire adapté

pendant les phases isochores du cycle d'échauffement et de condensation du cycle du moteur thermodynamique.

### BREVE DESCRIPTION DES FIGURES

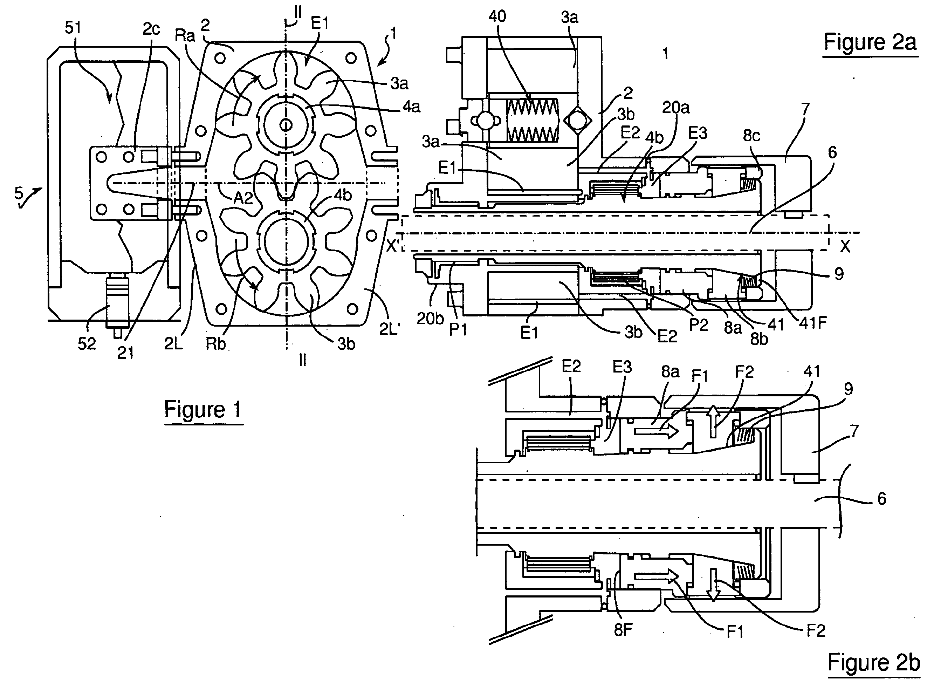

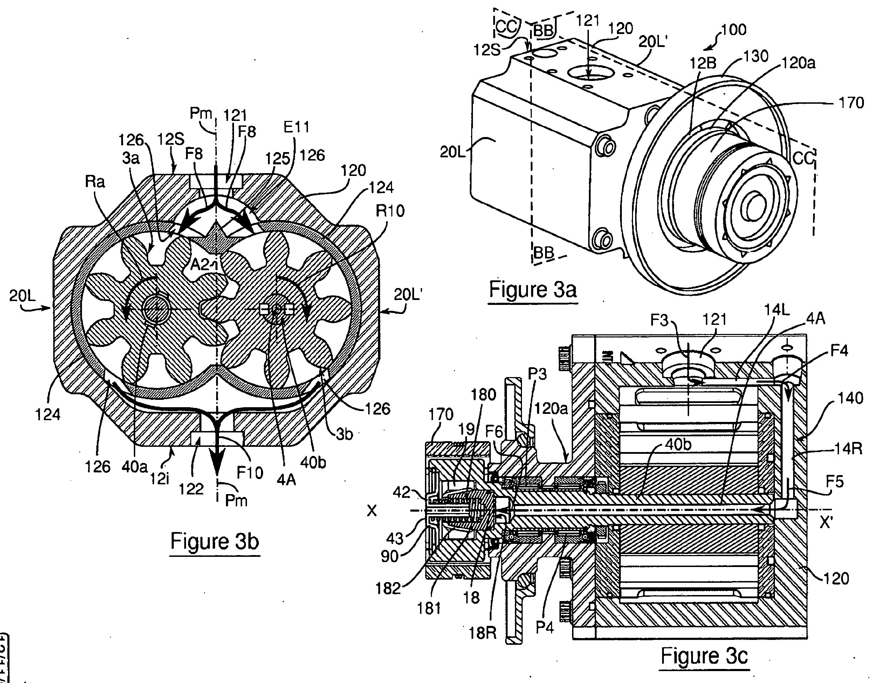

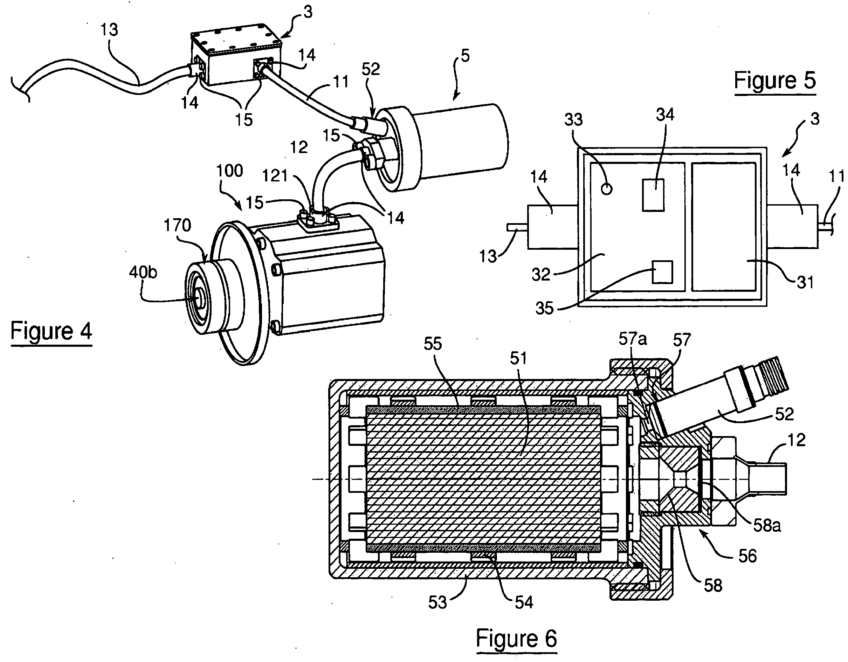

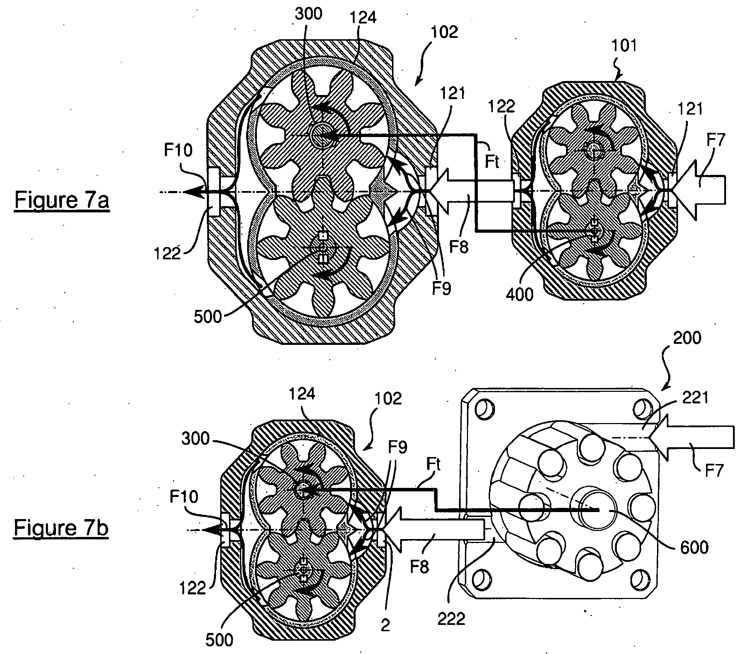

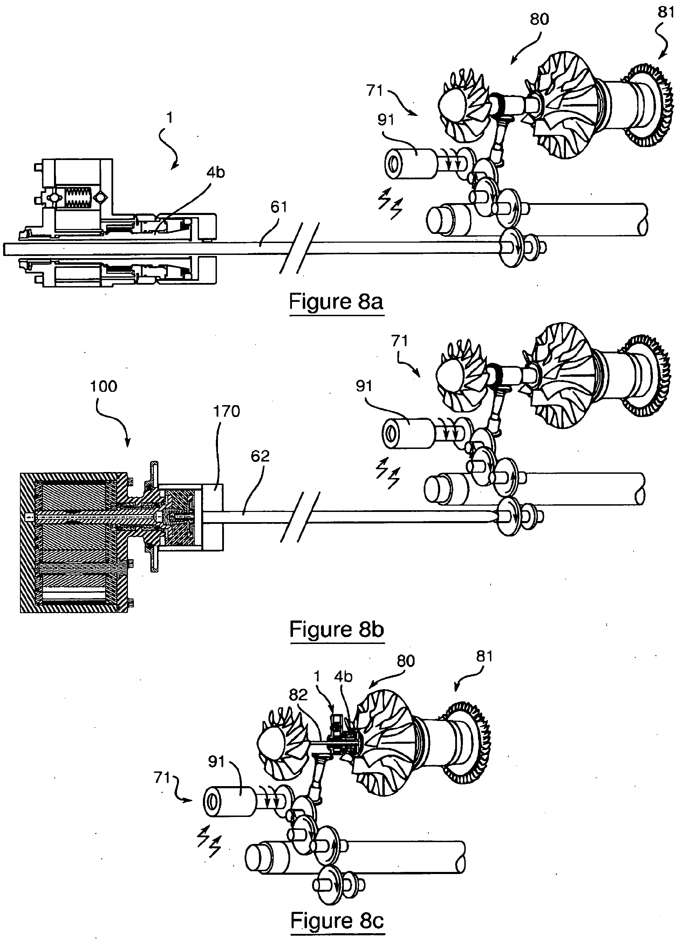

D'autres aspects, caractéristiques et avantages de l'invention apparaîtront dans la description qui suit, relative à des modes de réalisation particuliers, en référence aux dessins annexés qui représentent, respectivement :
- en figure 1, une vue schématique en coupe transversale d'un premier exemple de moteur volumétrique du système de démarrage d'urgence selon l'invention ;
- en figures 2a et 2b, des vue schématiques en coupe longitudinale du moteur volumétrique selon la figure 1, avant et après la projection de gaz pyrotechnique ;
- en figures 3a à 3c, des vues en perspective, en coupe transversale selon BB et en coupe longitudinale selon CC d'un autre exemple de moteur volumétrique du système de démarrage d'urgence selon l'invention ;
- en figure 4, une vue d'ensemble d'un exemple de système de démarrage d'urgence selon l'invention composé d'un boîtier électronique, d'un générateur pyrotechnique et d'un moteur volumétrique ;
- en figure 5, une vue en coupe du boîtier électronique selon la figure 4 ;
- en figure 6, une vue en coupe du générateur pyrotechnique selon la figure 4 ;
- en figure 7a, une vue en coupe d'un moteur volumétrique à deux étages comportant deux moteurs à pignons droits ;
- en figure 7b, une vue en coupe d'un moteur volumétrique à deux étages, comportant un moteur à galets couplé à un moteur à pignons droits ;
- en figure 8a, un exemple de montage d'un moteur volumétrique d'un système de démarrage selon l'invention sur un arbre d'une boîte d'accessoires de turbomachine ;
- en figure 8b, le montage de ce moteur volumétrique sur une cloche solidaire d'un pignon de la boîte d'accessoire selon la figure 8a ;
- en figure 8c, le montage de ce moteur volumétrique directement sur l'arbre de corps HP de la turbomachine selon la figure 8a.

### DESCRIPTION DETAILLEE

Dans la description, l'expression « coupe transversale » se rapporte à une vue dans un plan perpendiculaire à l'axe dit longitudinal des moteurs qui s'étendent principalement selon un tel axe. L'expression « coupe longitudinale » désigne une vue en coupe le long dudit l'axe longitudinal. Les qualificatifs « supérieur » ou « inférieur » réfèrent à des emplacements relatifs de paroi ou de face d'un appareil disposé en position standard d'utilisation. Par ailleurs, des signes de référence identiques renvoient à des éléments identiques tels que décrits dans les passages correspondants.

En référence à la vue en coupe transversale de la figure 1, un premier exemple de moteur volumétrique 1 d'un système de démarrage d'urgence selon l'invention comporte un carter 2 définissant un espace interne E1 logeant deux pignons à denture droite 3a et 3b, aptes à tourner selon des sens de rotation opposés (flèches Ra et Rb) autour d'arbres de transmission 4a et 4b. Le carter 2 possède deux parois latérales opposées 2L et 2L' sensiblement symétriques par rapport au plan longitudinal II-II. Une entrée de gaz 21 et une sortie de gaz 22, respectivement formées sur les parois 2L et 2L', présentent un même axe A2 qui s'étend sensiblement perpendiculairement aux parois 2L et 2L', à mi-chemin entre les engrenages 3a et 3b.

Un conduit de liaison 2C est fixé dans l'entrée de gaz 21 et au coeur d'un générateur de gaz pyrotechnique 5 pour permettre la propulsion des gaz de combustion dans le moteur 1. Ce générateur de gaz 5 contient un bloc de propergol 51 en liaison avec une cartouche d'allumage 52.

Comme il apparaît sur la vue de la figure 2a, en coupe longitudinale selon le plan II-II, le carter 2 du moteur 1 et l'arbre 4b du pignon 3b se prolongent longitudinalement le long de l'arbre de transmission 4b d'axe d'engrenage X'X pour recevoir un arbre 6 d'une architecture génératrice d'énergie à redémarrer. L'arbre de réception 6 traverse l'arbre de transmission 4b et vient se solidariser, hors de l'arbre 4b sur un embrayage cylindrique centrifuge 7.

L'embrayage centrifuge 7 coiffe des pièces annulaires mobiles - un piston 8a, une ferrule 8b et un support 8c - de connexion en rotation entre l'arbre de transmission 4b et l'embrayage 7. L'arbre de transmission 4b est monté sur des paliers P1 et P2 dans les extensions cylindriques 20a et 20b du carter 2, et l'arbre 4a du pignon 3a est monté dans le carter 2 par un mécanisme 40 à billes et lames élastiques.

L'arbre de transmission 4b présente en extrémité une portion conique 41 sur laquelle repose la ferrule 8b de forme tronconique complémentaire. Un ressort 9, agencé dans un espace coiffé par l'embrayage 7, entre la butée 8c et la ferrule 8b, prend appui en une extrémité sur la ferrule 8b et en l'autre extrémité sur un flasque 41F, formé en extrémité de la portion conique 41.

De plus, un espace annulaire E2, formé dans l'extension 20a du carter 2, en périphérie de l'arbre de transmission 4b, communique en une extrémité avec l'espace interne E1 du moteur 1 et en l'autre extrémité avec un espace radial E3 fermé par la face latérale 8F du piston 8a.

Comme illustré par la figure 2b, lorsque des gaz provenant de la combustion du propergol sont propulsés dans l'espace interne E1 (figure 1) du moteur 1, une partie de ces gaz est injectée dans l'espace annulaire E2 jusqu'à l'espace radial E3. Sous la poussée des gaz contre sa face latérale 8F, le piston 8a est animé d'un mouvement en translation (flèches F1) selon l'axe X'X le long de l'arbre 4b, et exerce une pression correspondante sur la ferrule 8b. La ferrule 8b, constituée de deux demi-ferrules maintenues entre le piston 8a et le support 8c, s'écarte radialement (flèches F2), par glissement des demi-ferrules le long de la portion conique 41, et viennent alors en contact serré avec l'embrayage centrifuge 7. L'embrayage est entraîné en rotation par friction et, simultanément, entraine en rotation l'arbre récepteur 6 de l'architecture à démarrer.

Dès que la pression des gaz passe sous un seuil déterminé, le ressort de rappel 9 exerce une force suffisante pour repousser la ferrule 8b en sens inverse de la flèche F1 et le contact de cette ferrule avec l'embrayage 7 est rompu : l'arbre de réception 6 est instantanément débrayé.

Un autre exemple de moteur volumétrique du système de démarrage d'urgence selon l'invention est illustré sur les vues en perspective et en coupes selon les figures 3a à 3c.

En référence à la figure 3a, le moteur volumétrique 100 se présente extérieurement comme le moteur volumétrique précédent avec un carter 120 comportant deux parois latérales 20L et 20L' et un embrayage centrifuge 170 monté sur l'extension cylindrique 120a du carter autour d'un arbre de transmission (voir figure 3c). Un flasque 130 est monté sur cette extension cylindrique 120a via une bague 12B pour permettre la fixation du moteur sur un carter de l'architecture à redémarrer. Une entrée de gaz 121 apparaît sur la paroi dite supérieure 12S du carter 120.

En coupe transversale selon la figure 3b (coupe BB sur la figure 3a), le carter 120 définit un espace interne E11 logeant - dans des chemises 124 - les deux pignons à denture droite 3a et 3b de l'exemple précédent, aptes à tourner selon des sens de rotation opposés (flèches Ra et Rb) autour d'arbres de transmission 40a et 40b. Les gaz entrants (flèches F8) sont séparés par un déflecteur 125 et les chemises présentent des ouvertures 126 pour faire circuler les gaz dans l'espace interne E11. L'arbre de transmission 40b présente un alésage central 4A qui est apte à conduire une partie des gaz de combustion. Les deux parois latérales opposées 20L et 20L' du carter 120 sont sensiblement symétriques. L'entrée de gaz 121 et la sortie des gaz 122, respectivement formées sur les parois dites supérieure et inférieure, respectivement 12S et 12I, présentent un même axe de symétrie A2 qui s'étend dans un plan médian Pm, parallèlement aux parois 20L et 20L'. Les gaz sont évacués (flèche F10) via les ouvertures 126.

En référence à la figure 3c (en coupe longitudinale selon CC de la figure 3a), il apparaît que le moyen de connexion en rotation entre l'arbre de transmission 40b - monté sur les paliers P3 et P4 - et l'embrayage centrifuge 170 est constitué par un piston conique 18 et un logement conique correspondant 18L, formé dans une pièce annulaire 19 solidaire de l'embrayage centrifuge 170. Un ressort hélicoïdal 90 est agencé dans un alésage 180 du piston 18, le long d'une tige 42 venant d'une butée 43 solidaire de l'extrémité de l'arbre de transmission 40b. Le ressort 90 s'étend entre la butée 43 et un épaulement 181 formé au fond de l'alésage 180 du piston 18. Par ailleurs, un conduit 140, présentant une portion longitudinale 14L et une portion radiale 14R, relie l'entrée de gaz 121 du carter 120 à l'alésage central 4A de l'arbre de transmission 40b.

Lorsque des gaz de combustion sont libérés par combustion du gaz propergol, une partie majoritaire des gaz entraînent en rotation les pignons 3a et 3b du moteur 100 et les arbres 4a et 4b. L'arbre de transmission 4b entraine à son tour le piston 18. Une partie minoritaire des gaz est prélevée par le conduit 140 (flèches F3, F4 et F5) pour être dirigé vers l'alésage central 4A de l'arbre 40b. Les gaz sont alors propulsés contre la face radiale 18R du piston 18 (flèche F6) qui se déplace en translation selon l'axe X'X de l'arbre de transmission 40b. Le piston 18 vient en contact serré dans son logement conique 18L, et entraîne alors en rotation par friction la pièce annulaire 19 ainsi que l'embrayage centrifuge 170 solidaire de la pièce 19.

Comme dans l'exemple précédent, dès que la pression des gaz passe sous ledit seuil déterminé, le ressort de rappel 90 exerce une force suffisante pour repousser le piston 18 en sens inverse de la flèche F6 et le contact du piston avec la pièce 19 solidaire de l'embrayage 170 est rompu : un arbre de réception de l'architecture à démarrer, en liaison avec l'embrayage 170 est alors débrayé.

La vue d'ensemble d'un exemple de système de démarrage d'urgence 10 selon l'invention est illustrée en figure 4. Ce système comprend un boîtier électronique 3, un générateur pyrotechnique 5 et le moteur volumétrique 100. Plus précisément, le boîtier électronique 3 est relié via un conduit électrique 11 à la cartouche d'allumage 52 du générateur pyrotechnique 5, lui-même relié à l'entrée 121 du moteur 100 via un conduit métallique rigide 12. De plus, le boîtier électronique 3 est relié au calculateur (non représenté) de l'architecture à démarrer, une turbomachine dans l'exemple, via un conduit électrique 13. Des connecteurs 14 fixées par des vis 15 assurent la connexion des conduits 11 à 13, au boîtier électronique 3, au générateur pyrotechnique 5 et au moteur volumétrique 100. Ce moteur 100 comporte un embrayage centrifuge 170 en liaison avec l'arbre de transmission 40b pour entraîner un arbre de l'architecture à démarrer.

Comme le montre plus précisément la vue en coupe de la figure 5, le boîtier électronique 3 loge une batterie 31 comme source d'énergie électrique autonome, et une carte électronique de commande 32. Cette carte intègre un composant thermosensible 33 et un microcontrôleur de gestion 34 de la batterie 31, du composant thermosensible 33 et d'autotests fonctionnels ainsi que d'alarmes de déclenchement de la cartouche d'allumage 52 du générateur pyrotechnique 5. Les conducteurs 11 et 13 sont montés sur le boîtier 3 à l'aide des connecteurs 14.

Les alarmes de déclenchement regroupent les alarmes sur détection d'incendie potentiel, déclenchés par le composant thermosensible 33, et les alarmes commandées par le calculateur en fonction de données fournies par des capteurs de vitesse ou des sondes de température.

Avantageusement, la carte électronique 32 intègre un composant de mesure de température 35 géré par le microcontrôleur 34 pour suivre les valeurs de températures hautes et permettre au calculateur d'établir la durée de vie sans dégradation de sûreté de fonctionnement.

Une vue en coupe du générateur pyrotechnique 5 est par ailleurs illustrée en figure 6. Ce générateur se compose d'un corps métallique 53 dans lequel le bloc de propergol 51 est agencé sur des cales 54. Une couche d'inhibiteur 55 entoure latéralement le bloc 51. Un capot métallique 56 est solidarisé au corps 53 pour assurer une fermeture hermétique. La cartouche d'allumage 52 est vissée dans un canal 57 formé dans le capot 56 et fermé par un embout 57a apte à fondre au-dessus d'une température préétablie. Les gaz de combustion du propergol mis à feu par la cartouche 52, sortent par un opercule 58a d'une tuyère accordée 58 en liaison avec le conduit métallique 12 qui mène au moteur volumétrique 100 (voir figure 4).

En variante des exemple de moteur volumétrique unique décrits ci-dessus, les moteurs 1 ou 100, les figures 7a et 7b montrent en coupe un moteur volumétrique à deux étages, comportant respectivement soit deux moteurs à pignons droits 101 et 102 (figure 7a), par exemple du type du moteur 100, soit un moteur à galets ou à palettes 200 (vu en coupe) et le moteur à pignons droits 102 (figure 7b).

Les gaz libérés par un générateur pyrotechnique sont propulsés à l'entrée 121 ou 221 du premier étage (flèches F7), constitué respectivement par le moteur à pignons droit 101 (figure 7a) ou par le moteur à galets ou à palettes 200 (figure 1 b), couplé en aval à un second étage monté en tandem, constitué par le moteur à pignons droits 102. En sorties 122 ou 222 du premier étage, les gaz sont projetés à l'entrée 121 (flèches F8) et à l'intérieur (flèches F9) du second moteur 102 à travers les chemises 124. Le second moteur 102 est avantageusement de dimension supérieure au premier moteur 101 ou 200 afin d'éviter un blocage du premier moteur. L'arbre de transmission 400 ou central 600 du premier moteur, respectivement 101 ou 200, est monté dans l'arbre secondaire 300 du second moteur 102 (flèches Ft), l'arbre de transmission 500 du second moteur assurant l'entraînement de l'architecture à redémarrer. Les gaz sortent par la sortie 122 du second moteur 102 (flèches F10).

Dans le cas où l'architecture à démarrer d'urgence est une turbomachine présentant un arbre de corps HP, des exemples de montage de moteurs volumétriques 1 ou 100 du système selon l'invention sont illustrés aux figures 8a à 8c.

En référence à la vue en perspective de la figure 8a, l'arbre de réception introduit dans l'arbre de transmission 4b du moteur volumétrique 1 est un arbre 61 de la boîte d'accessoires 71 montée sur le corps HP 80 de la turbomachine 81. La boîte d'accessoire 71 est équipée d'un démarreur électrique 91, qui est un élément de démarrage de secours redondant.

En référence à la vue en perspective de la figure 8b, l'arbre de réception 62 de la turbomachine 81 est monté sur une cloche solidaire d'un pignon de la boîte d'accessoires 71. La cloche est l'embrayage centrifuge 170 du moteur volumétrique 100.

En référence à la vue en perspective de la figure 8c, l'arbre de réception introduit dans l'arbre de transmission 4b du moteur volumétrique 1 est directement l'arbre HP 82 du corps HP 80 de la turbomachine 81.

La présente invention n'est pas limitée aux exemples décrits et représentés.

Il est par exemple possible d'utiliser des pignons à taille hélicoïdale, en gérant l'étanchéité du carter, ou encore des pignons « accolés » dans les moteurs volumétriques.

Alternativement au couplage par friction, d'autres moyens d'accouplement existent : roue libre, glace électromagnétique (par courants de Foucault), couplage visqueux de fluides électro-rhéologiques ou magnétorhéologiques.

Outre les moteurs à pignons et à palettes, les rotors à galets peuvent être utilisés en couplage avec des rainures de guidage dans les flasques axiaux.

Ainsi, dans le cas d'une architecture de type moteur thermodynamique à cycle de Stirling ou Ericsson ou équivalent, comportant un ensemble échangeur thermique et un circuit de calage angulaire variable, l'arbre de réception est l'arbre de commande de l'ensemble échangeur thermique et le boîtier électronique intègre une fonction supplémentaire de calage angulaire adapté pendant les phases isochores du cycle d'échauffement et de condensation du cycle du moteur thermodynamique.

Par ailleurs, le nombre de lobes ou dents des pignons peut bien entendu varier, par exemple de 2 à 8 lobes (comme représenté), voire plus. Les moyens de rappel peuvent être choisis entre au moins un ressort hélicoïdal, au moins une lame métallique, un électro-aimant et une cartouche de gaz à piston les alarmes de déclenchement regroupent les alarmes sur détection d'incendie potentiel par le composant thermosensible, et les alarmes commandées par le calculateur.

En outre, la carte électronique peut intégrer un composant de mesure de température géré par le microcontrôleur pour suivre les valeurs de températures hautes et permettre au calculateur d'établir la durée de vie sans dégradation de sûreté de fonctionnement ;

Avantageusement, les générateurs de gaz pyrotechniques peuvent être disposés en batterie dans des logements montés dans un barillet asservi par un mécanisme d'armement en liaison avec le conduit d'entrée du carter du moteur volumétrique.

## Revendications

1. Procédé de démarrage d'urgence d'une architecture génératrice d'énergie (81), **caractérisé en ce que**, une situation de démarrage d'urgence de l'architecture étant détectée, au moins un générateur de combustion de gaz pyrotechnique (5) est déclenché, des gaz sous pression étant alors générés par cette combustion et directement injectés dans un moteur volumétrique à engrenages (1, 100, 101, 102), **en ce qu'**une partie de ces gaz entraînent en rotation (Ra, Rb) les engrenages (3a, 3b) du moteur et, simultanément, la partie des gaz restants projette, contre une force de rappel (9), une connectique de couplage (8a à 8c ; 18, 19, 7, 170) entre le moteur (1, 100, 101, 102) et l'architecture (81), la connectique (8a à 8c ; 18, 19, 7, 170) assurant la transmission d'énergie par entraînement en rotation d'un arbre d'engrenage (4b, 40b ; 500) du moteur volumétrique (1, 100, 101, 102) sur un arbre de réception (61, 82) de l'architecture (81), et **en ce que**, lorsque la poussée (F1, F6) devient inférieure à la force de rappel, celle-ci repousse automatiquement la connectique (8a à 8c ; 18, 19, 7, 170) et l'architecture (81) est déconnectée du moteur volumétrique (1, 100, 101, 102).

2. Procédé de démarrage d'urgence selon la revendication 1, dans lequel la connectique de couplage (8a à 8c ; 18, 19, 7, 170) entre l'arbre d'engrenage (4b, 40b ; 500) et l'arbre de réception (61, 62, 82) de l'architecture à démarrer (81) est réalisée par friction.

3. Procédé de démarrage d'urgence selon la revendication précédente, dans lequel les gaz restants sont injectés dans le moteur volumétrique de manière périphérique (E2) autour de l'axe longitudinal (X'X) de sorte que la connectique de couplage (8a à 8c) provoque, par compression radiale (F2), l'entraînement en rotation de l'arbre (61, 82) de l'architecture à démarrer.

4. Procédé de démarrage d'urgence selon la revendication 2, dans lequel les gaz restants sont injectés dans le moteur volumétrique de manière centrale (4A) le long de l'axe longitudinal (X'X) de sorte que la connectique de couplage (18, 19, 7, 170) provoque, par couplage conique, l'entraînement en rotation de l'arbre (62) de l'architecture à démarrer.

5. Procédé de démarrage d'urgence selon l'une des revendications précédentes, dans lequel des générations de combustion de gaz pyrotechnique sont successivement déclenchés.

6. Procédé de démarrage d'urgence selon la revendication 2, dans lequel la force de rappel est générée par des moyens choisis entre la force élastique, la force électromagnétiques et la détente d'un fluide comprimé.

7. Système de démarrage d'urgence (10) d'une architecture génératrice d'énergie (81) apte à mettre en oeuvre le procédé selon l'une des revendications précédentes, **caractérisé en ce qu'**il comporte au moins un générateur de gaz pyrotechnique (5) relié à un initiateur électrique (3) lui-même relié à un calculateur, un moteur volumétrique (1, 100, 101) comprenant un carter (2, 120) définissant un espace interne (E1, E11) logeant des engrenages de préférence droits (3a, 3b), le générateur de gaz pyrotechnique (5) étant couplé au moteur (1, 100, 101) par une entrée (21, 121) du carter (2, 120), **en ce que** le moteur (1, 100, 101) comporte un moyen de connexion (8a à 8c ; 18, 19), apte à se déplacer en une extrémité d'un arbre de transmission (4b, 40b, 500) centré sur un axe d'engrenage (X'X) du moteur volumétrique (1, 100, 101), pour pouvoir coupler cet arbre de transmission à un arbre récepteur (61, 62, 82) de l'architecture (81) via un embrayage centrifuge (7, 170), et **en ce qu'**un moyen de rappel (9, 90) agencé en butée (41 F), est apte à exercer une force de rappel contre la pression (F1, F6) exercée sur le moyen de connexion (8a à 8c ; 18, 19).

8. Système de démarrage d'urgence selon la revendication précédente, dans lequel un espace annulaire (E2), formé dans un prolongement (20a) du carter (2) en périphérie de l'arbre de transmission (4b) du moteur volumétrique (1), communique avec ledit espace interne (E1) pour permettre une injection d'une partie des gaz provenant de la combustion du gaz pyrotechnique jusqu'au moyen de connexion (8a à 8c), ce moyen de connexion étant composé d'un piston annulaire (8a), apte à se déplacer en translation (X'X) sous la poussée (F1) des gaz, le long de l'arbre de transmission (4b) du moteur (1), pour exercer une pression sur une ferrule (8b) apte à s'écarter radialement (F2) sous cette pression et entraîner l'embrayage centrifuge (7) par friction.

9. Système de démarrage d'urgence selon la revendication précédente, dans lequel la ferrule (8b) est composée d'au moins une portion annulaire ouverte dont l'écartement radial est réalisé par glissement le long d'une portion conique (41) de l'arbre de transmission (4b) du moteur (1).

10. Système de démarrage d'urgence selon la revendication 8 ou 9, dans lequel un conduit (140 ; 14L, 14R) relié à l'entrée de gaz (121) du carter (120) communique avec un alésage central (4A) de l'arbre de transmission (40b) pour permettre une circulation d'une partie des gaz provenant du générateur de gaz pyrotechnique (5) jusqu'au moyen de connexion (18, 19), ce moyen de connexion étant composé d'un piston conique (18) apte à se déplacer en translation, sous la poussée (F6) des gaz, selon l'axe (X'X) de l'arbre de transmission (40b) du moteur (100) pour se loger dans un alésage conique (18L), solidaire de l'embrayage centrifuge (170), afin de l'entraîner par friction.

11. Système de démarrage d'urgence selon l'une des revendications 8 à 10, dans lequel l'initiateur électrique est constitué par un boîtier électronique (3) comportant une source d'énergie électrique autonome (31), et une carte électronique de commande (32) intégrant un composant thermosensible (33) et un microcontrôleur de gestion (34) de la source électrique (31), du composant thermosensible (33), d'autotests fonctionnels ainsi que des alarmes de déclenchement d'une cartouche d'allumage (52) du générateur de gaz pyrotechnique (5).

12. Système de démarrage d'urgence selon l'une des revendications 8 à 11, dans lequel les engrenages du moteur volumétrique (1, 100, 101, 102) sont des pignons à denture droite (3a, 3b).

13. Système de démarrage d'urgence selon l'une des revendications 8 à 12, dans lequel dans le cas où l'architecture est une turbomachine (81) présentant un arbre (82) de corps HP (80), l'arbre de réception est choisi parmi un arbre (61, 62) de boîte d'accessoires (71) montée sur le corps HP (80), une cloche (7, 170) solidaire d'un pignon de la boîte d'accessoires (71) et utilisée comme embrayage centrifuge (7, 170), et l'arbre (82) du corps HP (80).

## Patentansprüche

1. Verfahren zum Notstarten einer energieerzeugenden Architektur (81), **dadurch gekennzeichnet, dass**, wenn eine Situation des Notstartens erkannt wird, mindestens ein Generator zum Verbrennen von pyrotechnischem Gas (5) ausgelöst wird, wobei dann Gase unter Druck durch diese Verbrennung erzeugt und direkt in einen Verdrängermotor mit Getriebe (1, 100, 101, 102) eingespritzt werden, dass ein Teil dieser Gase das Getriebe (3a, 3b) des Motors in Drehung (Ra, Rb) versetzt und gleichzeitig der Teil der verbleibenden Gase einen Kupplungsanschluss (8a bis 8c, 18, 19, 7, 170) zwischen dem Motor (1 , 100, 101, 102) und der Architektur (81) gegen eine Rückstellkraft (9) schiebt, wobei der Anschluss (8a bis 8c, 18, 19, 7, 170) die Energieübertragung durch in Drehung Versetzen einer Getriebewelle (4b, 40b; 500) des Verdrängermotors (1, 100, 101, 102) auf einer Aufnahmewelle (61, 82) der Architektur (81) gewährleistet, und dass, wenn der Schub (F1, F6) kleiner als die Rückstellkraft wird, diese den Anschluss (8a bis 8c, 18, 19, 7, 170) automatisch zurückschiebt und die Architektur (81) von dem Verdrängermotor (1, 100, 101, 102) getrennt wird.

2. Verfahren zum Notstarten nach Anspruch 1, wobei der Kupplungsanschluss (8a bis 8c, 18, 19, 7, 170) zwischen der Getriebewelle (4b, 40b; 500) und der Aufnahmewelle (61, 62, 82) der zu startenden Architektur (81) durch Reibung erstellt wird.

3. Verfahren zum Notstarten nach dem vorhergehenden Anspruch, wobei die verbleibenden Gase in den Verdrängermotor peripher (E2) um die Längsachse (X'X) derart eingespritzt werden, dass der Kupplungsanschluss (8a bis 8c) durch radiale Kompression (F2) das in Drehung Versetzen der Welle (61, 82) der zu startenden Architektur bewirkt.

4. Verfahren zum Notstarten nach Anspruch 2, wobei die verbleibenden Gase in den Verdrängermotor zentral (4A) entlang der Längsachse (X'X) derart eingespritzt werden, dass der Kupplungsanschluss (18, 19, 7, 170) durch konische Kupplung das in Drehung Versetzen der Welle (62) der zu startenden Architektur bewirkt.

5. Verfahren zum Notstarten nach einem der vorhergehenden Ansprüche, wobei Verbrennungserzeugungen von pyrotechnischem Gas nacheinander ausgelöst werden.

6. Verfahren zum Notstarten nach Anspruch 2, wobei die Rückstellkraft durch Mittel erzeugt wird, die zwischen der Federkraft, der elektromagnetischen Kraft und der Entspannung einer komprimierten Flüssigkeit ausgewählt werden.

7. System zum Notstarten (10) einer energieerzeugenden Architektur (81), das geeignet ist, das Verfahren nach einem der vorhergehenden Ansprüche durchzuführen, **dadurch gekennzeichnet, dass** es mindestens einen pyrotechnischen Gasgenerator (5), der mit einem elektrischen Initiator (3) verbunden ist, der selbst mit einem Computer verbunden ist, einen Verdrängermotor (1, 100, 101), der ein Gehäuse (2, 120) aufweist, das einen Innenraum (E1, E11) definiert, das vorzugsweise die Stirnradgetriebe (3a, 3b) aufnimmt, aufweist, wobei der pyrotechnische Gasgenerator (5) durch einen Einlass (21, 121) des Gehäuses (2, 120) mit dem Motor (1, 100, 101) gekoppelt ist, dass der Motor (1, 100, 101) ein Verbindungsmittel (8a bis 8c; 18, 19) aufweist, das geeignet ist, sich an einem Ende einer Antriebswelle (4b, 40b, 500) zu bewegen, die auf einer Getriebeachse (X'X) des Verdrängermotors (1, 100, 101) zentriert ist, um diese Antriebswelle mit einer Aufnahmewelle (61, 62, 82) der Architektur (81) über eine Zentrifugalkupplung (7, 170) zu koppeln, und dass ein Rückstellmittel (9, 90), das im Anschlag (41 F) angeordnet ist, geeignet ist, eine Rückstellkraft gegen den Druck (F1, F6) auszuüben, der auf das Verbindungsmittel (8a bis 8c; 18, 19) ausgeübt wird.

8. System zum Notstarten nach dem vorhergehenden Anspruch, wobei ein ringförmiger Raum (E2), der in einer Verlängerung (20a) des Gehäuses (2) am Umfang der Antriebswelle (4b) des Verdrängermotors (1) gebildet ist, mit dem inneren Raum (E1) in Verbindung steht, um ein Einspritzen eines Teils der Gase, die von der Verbrennung des pyrotechnischen Gases stammen, bis zum Verbindungsmittel (8a bis 8c) zu ermöglichen, wobei dieses Verbindungsmittel aus einem ringförmigen Kolben (8a) gebildet ist, der geeignet ist, sich in Translation (X'X) unter dem Schub (F1) der Gase entlang der Antriebswelle (4b) des Motors (1) zu verschieben, um einen Druck auf eine Druckhülse (8b) auszuüben, die geeignet ist, sich radial (F2) unter diesem Druck aufzuspreizen und die Zentrifugalkupplung (7) durch Reibung anzutreiben.

9. Verfahren zum Notstarten nach dem vorhergehenden Anspruch, wobei die Druckhülse (8b) aus mindestens einem offenen ringförmigen Abschnitt gebildet ist, dessen radiales Aufspreizen durch Gleiten entlang eines konischen Abschnitts (41) der Antriebswelle (4b) des Motors (1) durchgeführt wird.

10. System zum Notstarten nach Anspruch 8 oder 9, wobei eine Leitung (140 ; 14L, 14R), die mit dem Gaseinlass (121) des Gehäuses (120) verbunden ist, mit einer zentralen Bohrung (4A) der Antriebswelle (40b) in Verbindung steht, um ein Zirkulieren eines Teils des Gases, das von dem pyrotechnischen Gasgenerator (5) stammt, bis zu dem Verbindungsmittel (18, 19) zu ermöglichen, wobei dieses Verbindungsmittel aus einem konischen Kolben (18) gebildet ist, der geeignet ist, sich in Translation unter dem Schub (F6) der Gase entlang der Achse (X'X) der Antriebswelle (40b) des Motors (100) zu verschieben, um in einer konischen Bohrung (18L) aufgenommen zu werden, die mit der Zentrifugalkupplung (170) fest verbunden ist, um sie durch Reibung anzutreiben.

11. System zum Notstarten nach einem der Ansprüche 8 bis 10, wobei der elektrische Initiator aus einem Steuergerät (3) gebildet ist, das eine unabhängige elektrische Stromquelle (31) und eine elektronische Steuerplatine (32) aufweist, in der eine wärmeempfindliche Komponente (33) und ein Microcontroller zum Verwalten (34) der elektrischen Stromquelle (31), der wärmeempfindlichen Komponente (33), funktioneller Selbsttests und der Alarme zum Auslösen einer Zündpatrone (52) des pyrotechnischen Gasgenerators (5) integriert sind.

12. System zum Notstarten nach einem der Ansprüche 8 bis 11, wobei die Getriebe des Verdrängermotors (1, 100, 101, 102) Stirnräder (3a, 3b) sind.

13. System zum Notstarten nach einem der Ansprüche 8 bis 12, wobei in dem Fall, bei dem die Architektur eine Turbomaschine (81) ist, die eine Welle (82) eines Hochdruckkörpers (80) aufweist, die Aufnahmewelle aus einer Welle (61, 62) des Hilfsgerätegetriebes (71), das auf dem Hochdruckkörper (80) montiert ist, einer Glocke (7, 170), die fest mit einem Ritzel des Hilfsgerätegetriebes (71) verbunden ist und als Zentrifugalkupplung (7, 170) verwendet wird, und der Welle (82) des Hochdruckkörpers (80) ausgesucht ist.

## Claims

1. Emergency start-up method for an energy generator set (81), **characterised in that**, if an emergency start-up situation for the set is detected, at least one pyrotechnic gas combustion generator (5) is triggered, pressurised gases then being generated by this combustion and injected directly into a positive displacement motor with gear wheels (1, 100, 101, 102), **in that** a portion of these gases rotate (Ra, Rb) the gear wheels (3a, 3b) of the motor and, simultaneously, the remaining portion of the gases projects a coupling connection (8a to 8c; 18, 19, 7, 170) between the motor (1, 100, 101, 102) and the set (81), against a restoring force (9), the connection (8a to 8c; 18, 19, 7, 170) bringing about the transmission of energy by rotating a gear shaft (4b, 40b; 500) of the positive displacement motor (1, 100, 101, 102) on a driven shaft (61, 82) of the set (81), and **in that**, when the thrust (F1, F6) falls below the restoring force, said force automatically repels the connection (8a to 8c; 18, 19, 7, 170) and the set (81) is disconnected from the positive displacement motor (1, 100, 101, 102).

2. Emergency start-up method according to claim 1, wherein the coupling connection (8a to 8c; 18, 19, 7, 170) between the gear shaft (4b, 40b; 500) and the driven shaft (61, 62, 82) of the set to be restarted ((81) is produced by friction.

3. Emergency start-up method according to the preceding claim, wherein the remaining gases are injected into the positive displacement motor peripherally (E2) about the longitudinal axis (X'X) so that the coupling connection (8a to 8c) uses radial compression (F2) to rotate the shaft (61, 82) of the set to be restarted.

4. Emergency start-up method according to claim 2, wherein the remaining gases are injected into the positive displacement motor centrally (4A) along the longitudinal axis (X'X) so that the coupling connection (18, 19, 7, 170) uses conical coupling to rotate the shaft (62) of the set to be restarted.

5. Emergency start-up method according to any of the preceding claims, wherein successive instances of pyrotechnic gas combustion generation are triggered.

6. Emergency start-up method according to claim 2, wherein the restoring force is generated by means chosen from elastic force, electromagnetic force and expansion of a compressed fluid.

7. Emergency start-up system (10) for an energy generator set (81) capable of implementing the method according to any of the preceding claims, **characterised in that** it comprises at least a pyrotechnic gas generator (5) connected to an electrical initiator (3), itself connected to a computer, a positive displacement motor (1, 100, 101) comprising a casing (2, 120) defining an internal space (E1, E11) housing gearwheels, preferably straight-cut (3a, 3b), the pyrotechnic gas generator (5) being coupled to the motor (1, 100, 101) by an inlet (21, 121) in the casing (2, 120), **in that** the motor (1, 100, 101) has a connection means (8a to 8c; 18, 19), capable of moving at one end of a drive shaft (4b, 40b, 500) centred about a gear-wheel axis (X'X) of the positive displacement motor (1, 100, 101), so as to be able to couple this drive shaft to a driven shaft (61, 62, 82) of the set (81) via a centrifugal clutch (7, 170), and **in that** a return means (9, 90) arranged in abutment (41 F), is capable of exerting a restoring force against the pressure (F1, F6) exerted on the connection means (8a to 8c; 18, 19).

8. Emergency start-up system according to the preceding claim, wherein an annular space (E2), formed in an extension (20a) of the casing (2) on the periphery of the drive shaft (4b) of the positive displacement motor (1), communicates with said internal space (E1) to allow some of the gases coming from the combustion of the pyrotechnic gas to be injected as far as the connection means (8a to 8c), this connection means being composed of an annular piston (8a), capable of being moved in translation (X'X) by the thrust (F1) of the gases along the drive shaft (4b) of the motor (1), so as to exert pressure on a ferrule (8b) capable of moving aside radially (F2) under this pressure and driving the centrifugal clutch (7) by friction.

9. Emergency start-up system according to the preceding claim, wherein the ferrule (8b) is composed of at least an open annular portion, which is moved aside radially by sliding along a conical portion (41) of the drive shaft (4b) of the motor (1).

10. Emergency start-up system according to either claim 8 or claim 9, wherein a conduit (140; 14L, 14R) connected to the gas inlet (121) of the casing (120) communicates with a central bore (4A) of the drive shaft (40b) to allow some of the gases coming from the pyrotechnic gas generator (5) to circulate as far as the connection means (18, 19), this connection means being composed of a conical piston (18), capable of being moved in translation by the thrust (F6) of the gases along the axis (X'X) of the drive shaft (40b) of the motor (100), so as to become housed in a tapered bore (18L), rigidly connected to the centrifugal clutch (170), in order to drive it by friction.

11. Emergency start-up system according to any of claims 8 to 10, wherein the electrical initiator is constituted by an electronic unit (3) having an autonomous electrical power source (31), and an electronic control board (32) incorporating a heat-sensitive component (33) and a microcontroller (34) for managing the electrical power source (31), the heat-sensitive component (33), functional self-tests and alarms for triggering an ignition cartridge (52) of the pyrotechnic gas generator (5).

12. Emergency start-up system according to any of claims 8 to 11, wherein the gear wheels of the positive displacement motor (1, 100, 101, 102) are spur pinions (3a, 3b).

13. Emergency start-up system according to any of claims 8 to 12, wherein if the set is a turbine engine (81) having a shaft (82) of an HP spool (80), the driven shaft is chosen from a shaft (61, 62) of an accessory gearbox (71) mounted on the HP spool (80), a bell housing (7, 170) rigidly connected to a pinion of the accessory gearbox (71) and used as a centrifugal clutch (7, 170), and the shaft (82) of the HP spool (80).
